# EUROPEAN PATENT APPLICATION

(11) **EP 4 043 710 A1**
(43) Date of publication of application: **17.08.2022**
(21) Application number: 22154537.9
(22) Date of filing: 01.02.2022
(51) Int. Cl.: F02C 6/20, F02C 7/36

(54) **OPEN ROTOR TURBOMACHINERY ENGINES**

(30) Priority: 15.02.2021 US 202117176106
(71) Applicant: General Electric Company, Schenectady, NY 12345 (US)
(72) Inventor: DEPUY, Timothy Richard, Evendale, 45241 (US); GOERIG, Trevor, Evendale, 45241 (US); CLEMENTS, Jeffrey, Evendale, 45241 (US); KHALID, Syed Arif, Evendale, 45241 (US)
(74) Representative: Openshaw & Co.

(57) **Abstract**

A turbomachinery engine includes an unducted rotor assembly, a low-pressure turbine, a low-pressure shaft, a gearbox, and an engine correlation parameter. The unducted rotor assembly includes a plurality of rotor blades arranged in a single row and defining a blade diameter. The gearbox includes an input, an output, and a gear ratio. The input of the gearbox is coupled to the low-pressure shaft (which is coupled to the LPT), and the output of the gearbox is coupled to the unducted rotor assembly. The engine correlation parameter is greater than 0.17 and less than 0.83. The engine correlation parameter equals D/N/GR, where D is the blade tip diameter measured in feet, N is the stage count of the low-pressure turbine, and GR is the gear ratio of the gearbox. The unducted propulsor assembly optionally includes a disk loading within a range of 60-180 HP/ft² at a takeoff flight condition.

## Description

### FIELD

This disclosure relates generally to turbomachinery engines and, in particular, to open rotor turbomachinery engine configurations.

### BACKGROUND

A turbomachinery engine for an aircraft includes a core engine that drives a propulsor. The propulsor generates the majority of the thrust of the turbomachinery engine. The thrust generated by the propulsor can be used to move the aircraft.

In some instances, a turbomachinery engine is configured as a direct drive engine. Direct drive engines are configured such that a power turbine (e.g., a low-pressure turbine) of the core engine is directly coupled to the propulsor. As such, the power turbine and the propulsor rotate at the same rotational speed (i.e., the same rpm).

In other instances, a turbomachinery engine can be configured as a geared engine. Geared engines include a gearbox disposed between and interconnecting the propulsor and power turbine of the core engine. The gearbox, for example, allows the power turbine of the core engine to rotate at a different speed than the propulsor. Thus, the gearbox can, for example, allow the power turbine of the core engine and the propulsor to operate at their respective rotational speeds for maximum efficiency and/or power production.

In some instances, a propulsor of a turbomachinery engine can be a fan encased within a fan case and/or nacelle. This type of turbomachinery engine can be referred to as "a ducted engine."

In other instances, a propulsor of a turbomachinery engine can be exposed (e.g., not within a fan case or a nacelle). This type of turbomachinery engine can be referred to as "an open rotor engine."

In particular instances, a turbomachinery engine can comprise a gearbox and an exposed propulsor. Despite certain advantages, a geared, open rotor engine can have one or more drawbacks; for example, including a gearbox in a turbomachinery engine introduces additional complexity to the engine. This can, for example, make engine development and/or manufacturing significantly more difficult. Additionally or alternatively, open rotor engines can produce undesirable noise levels. As such, there is a need for improved geared, open rotor turbomachinery engines. There is also a need for devices and methods that can be used to develop and manufacture geared, open rotor turbomachinery engines more efficiently and/or precisely.

### BRIEF DESCRIPTION

Aspects and advantages of the disclosed technology will be set forth in part in the following description, or may be obvious from the description, or may be learned through practice of the technology disclosed in the description.

Various turbomachinery engines and gear assemblies are disclosed herein. The disclosed turbomachinery engines comprise a gearbox and an open rotor propulsor. Additionally, the disclosed turbomachinery engines are characterized or defined by an engine correlation parameter. The engine correlation parameter (ECP) equals D/N/GR, where D is the blade tip diameter measured in feet, where N is the stage count of the low-pressure turbine, and where GR is the gear ratio of the gearbox. The ECP can be used, for example, to configure an engine such that the engine has greater efficiency and lower noise than typical engines. In some instances, the engines disclosed herein comprising the ECP are lighter, have greater propulsive efficiency, have greater engine efficiency, and/or are quieter than typical engines. The ECP thus provides improved turbomachinery engines and/or can help simplify one or more complexities of geared, open rotor engine development.

In particular embodiments, a turbomachinery engine includes an unducted rotor assembly (which can also be referred to as an unducted propulsor assembly), a low-pressure turbine, a low-pressure shaft, a gearbox, and an engine correlation parameter. The unducted rotor assembly includes a plurality of rotor blades arranged in a single row and defining a blade diameter. The low-pressure turbine includes a stage count defined by a number of rows of rotating blades of the low-pressure turbine. The low-pressure shaft is coupled to the low-pressure turbine. The gearbox includes an input, an output, and a gear ratio. The input of the gearbox is coupled to the low-pressure shaft, and the output of the gearbox is coupled to the unducted rotor assembly. The engine correlation parameter is greater than 0.17 and less than 0.83.

In some examples, a single unducted rotor turbomachinery engine includes a low-pressure turbine, a low-pressure spool, a gearbox, and an unducted rotor assembly. The low-pressure turbine defines a stage count. The low-pressure spool is coupled to the low-pressure turbine. The gearbox defines a gear ratio. The unducted rotor assembly includes a plurality of rotor blades defining a blade tip diameter, and the unducted rotor assembly is coupled to the low-pressure spool via the gearbox. The single unducted rotor turbomachinery engine defines an engine correlation parameter equal to the blade tip diameter measured in feet, divided by the stage count of the low-pressure turbine, divided by the gear ratio of the gearbox, and the engine correlation parameter is greater than 0.17 and less than 0.83.

In other example, a turbomachinery engine includes an unducted propulsor assembly, a low-pressure compressor, a low-pressure turbine, a low-pressure shaft, a high-pressure compressor, a high-pressure turbine, a high-pressure shaft, a gearbox, and an engine correlation parameter. The unducted propulsor assembly includes a plurality of propulsor blades arranged in a single row and defining a blade diameter, and the blade tip diameter is within a range of 8-14 feet, or 10-16 feet. The low-pressure compressor includes one or more LPC rotors which define a LPC stage count. The low-pressure turbine includes a plurality of LPT rotors which define a LPT stage count, and the LPT stage count is within a range of 3-8. The low-pressure shaft is coupled to the low-pressure compressor and the low-pressure turbine. The high-pressure compressor includes a plurality of HPC rotors which define a HPC stage count. The high-pressure turbine includes one or more HPT rotors which define a HPT stage count. The high-pressure shaft is coupled to the high-pressure compressor and the high-pressure turbine. The gearbox includes an input, an output, and a gear ratio. The input is coupled to the low-pressure shaft and is configured to rotate at a first rotational speed. The output is coupled to the unducted propulsor assembly and is configured to rotate at a second rotational speed, which is less than the first rotational speed. The gear ratio is defined by a ratio of the first rotational speed to the second rotational speed and is within a range of 4-12. The engine correlation parameter is within a range of 0.17-0.83, where the engine correlation parameter equals D/N/GR, D is the blade tip diameter of the propulsor blades measured in feet, N is the LPT stage count of the low-pressure turbine, and GR is the gear ratio of the gearbox.

The propulsors of the unducted engines disclosed herein can also comprise a disk loading within a particular range at a takeoff flight condition. More particularly, the disclosed engines can comprise an unducted propulsor having a disk loading between 60-180 HP/ft² at a takeoff flight condition. Disk loading is the power at a takeoff flight condition measured in horsepower (HP) divided by the swept area of the propulsor measured in square feet (ft²). In some instances, particular propulsor disk loading ranges and ECP ranges can be combined to provide an improved engine configuration. For example, in some implementations, an engine can comprise an ECP of 0.17-0.83 and a propulsor disk loading between 60-180 HP/ft² at a takeoff flight condition. In other examples, an engine can comprise an ECP of 0.17-0.63 and a propulsor disk loading between 60-180 HP/ft² at a takeoff flight condition. An engine comprising the disclosed ECP and/or propulsor disk loading ranges can, for example, advantageously provide improved engine performance and efficiency compared to typical engines, while also satisfying the acoustics requirements.

These and other features, aspects, and/or advantages of the present disclosure will become better understood with reference to the following description, drawings, and claims. The accompanying drawings, which are incorporated in and constitute a part of this specification, illustrate embodiments of the disclosed technology and, together with the description, serve to explain the principles of the disclosure.

### BRIEF DESCRIPTION OF THE DRAWINGS

FIG. 1 is a cross-sectional schematic illustration of an exemplary embodiment of a turbomachinery engine configured with an open rotor propulsion system.
FIG. 2 is a cross-sectional schematic illustration of an exemplary embodiment of a turbomachinery engine comprising an open rotor propulsion system, a three-stream architecture, and one or more heat exchangers in a third stream of the three-stream architecture.
FIG. 3 is a cross-sectional schematic illustration of an exemplary embodiment of a counter-rotating low-pressure turbine of a turbomachinery engine, the low-pressure turbine having a 3x3 configuration.
FIG. 4 is a cross-sectional schematic illustration of an exemplary embodiment of a counter-rotating low-pressure turbine of a turbomachinery engine, the low-pressure turbine having a 4x3 configuration.
FIG. 5 is a cross-sectional schematic illustration of an exemplary embodiment of a gearbox configuration for a turbomachinery engine.
FIG. 6 is a cross-sectional schematic illustration of an exemplary embodiment of a gearbox configuration for a turbomachinery engine.
FIG. 7 is a cross-sectional schematic illustration of an exemplary embodiment of a gearbox configuration for a turbomachinery engine.
FIG. 8 is a cross-sectional schematic illustration of an exemplary embodiment of a gearbox configuration for a turbomachinery engine.
FIG. 9 is a cross-sectional schematic illustration of an exemplary embodiment of a gearbox configuration for a turbomachinery engine.
FIG. 10 is a chart depicting various engine parameters of several exemplary turbomachinery engines comprising a 10 foot fan diameter.
FIG. 11 is a chart depicting various engine parameters of several exemplary turbomachinery engines comprising an 11 foot fan diameter.
FIG. 12 is a chart depicting various engine parameters of several exemplary turbomachinery engines comprising a 12 foot fan diameter.
FIG. 13 is a chart depicting various engine parameters of several exemplary turbomachinery engines comprising a 13 foot fan diameter.
FIG. 14 is a chart depicting various engine parameters of several exemplary turbomachinery engines comprising a 14 foot fan diameter.
FIG. 15 is a chart depicting various engine parameters of several exemplary turbomachinery engines comprising a 15 foot fan diameter.
FIG. 16 is a chart depicting various engine parameters of several exemplary turbomachinery engines comprising a 16 foot fan diameter.
FIG. 17 is a graph depicting an exemplary range of engine correlation parameter relative to an exemplary range of propulsor disk loading for a turbomachinery engine.
FIG. 18 is a graph depicting an exemplary range of engine correlation parameter relative to an exemplary range of propulsor disk loading for a turbomachinery engine.

### DETAILED DESCRIPTION

Reference now will be made in detail to embodiments of the disclosed technology, one or more examples of which are illustrated in the drawings. Each example is provided by way of explanation of the disclosed technology, not limitation of the disclosure. In fact, it will be apparent to those skilled in the art that various modifications and variations can be made in the present disclosure without departing from the scope or spirit of the disclosure. For instance, features illustrated or described as part of one embodiment can be used with another embodiment to yield a still further embodiment. Thus, it is intended that the present disclosure covers such modifications and variations as come within the scope of the appended claims and their equivalents.

The word "exemplary" is used herein to mean "serving as an example, instance, or illustration." Any implementation described herein as "exemplary" is not necessarily to be construed as preferred or advantageous over other implementations.

As used herein, the terms "first," "second," and "third" may be used interchangeably to distinguish one component from another and are not intended to signify location or importance of the individual components.

The terms "forward" and "aft" refer to relative positions within a gas turbine engine or vehicle, and refer to the normal operational attitude of the gas turbine engine or vehicle. For example, with regard to a gas turbine engine, forward refers to a position closer to an engine inlet and aft refers to a position closer to an engine nozzle or exhaust.

The terms "upstream" and "downstream" refer to the relative direction with respect to fluid flow in a fluid pathway. For example, "upstream" refers to the direction from which the fluid flows, and "downstream" refers to the direction to which the fluid flows.

The terms "coupled," "fixed," "attached to," and the like refer to both direct coupling, fixing, or attaching, as well as indirect coupling, fixing, or attaching through one or more intermediate components or features, unless otherwise specified herein.

The singular forms "a," "an," and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms, such as "about," "approximately," and "substantially," are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 1, 2, 4, 5, 10, 15, or 20 percent margin in either individual values, range(s) of values and/or endpoints defining range(s) of values.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

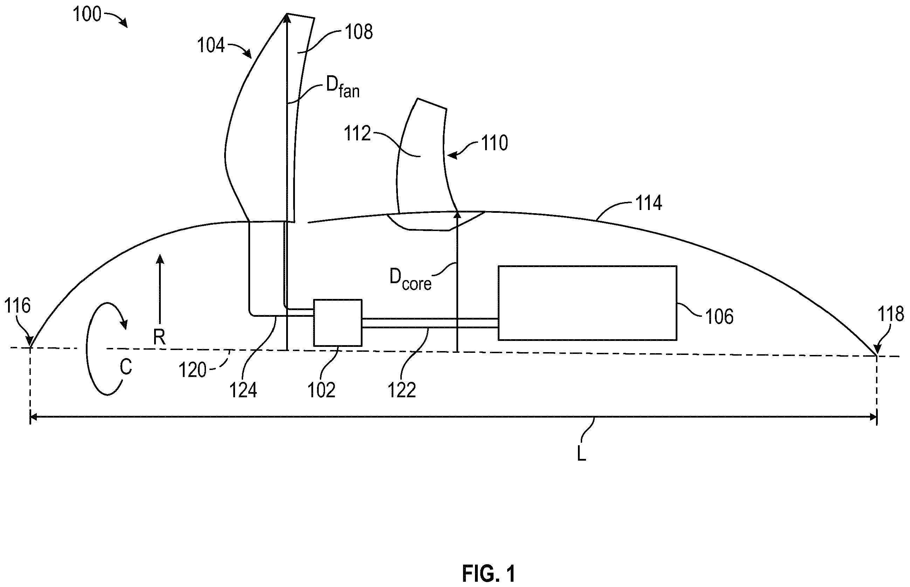

Referring now to the drawings, FIG. 1 is an exemplary embodiment of an engine 100 including a gear assembly 102 according to aspects of the present disclosure. The engine 100 includes a fan assembly 104 driven by a core engine 106. In various embodiments, the core engine 106 is a Brayton cycle system configured to drive the fan assembly 104. The core engine 106 is shrouded, at least in part, by an outer casing 114. The fan assembly 104 includes a plurality of fan blades 108. A vane assembly 110 extends from the outer casing 114 in a cantilevered manner. Thus, the vane assembly 110 can also be referred to as an unducted vane assembly. The vane assembly 110, including a plurality of stationary outlet guide vanes 112, is positioned in operable arrangement with the fan blades 108 to provide thrust, control thrust vector, abate or re-direct undesired acoustic noise, and/or otherwise desirably alter a flow of air relative to the fan blades 108.

In some embodiments, the fan assembly 104 includes eight (8) to twenty (20) fan blades 108 (which can also be referred to as "propulsor blades"). In particular embodiments, the fan assembly 104 includes ten (10) to eighteen (18) fan blades 108. In certain embodiments, the fan assembly 104 includes twelve (12) to sixteen (16) fan blades 108. In some embodiments, the vane assembly 110 includes three (3) to thirty (30) vanes 112. In certain embodiments, the vane assembly 110 includes an equal or fewer quantity of vanes 112 to fan blades 108. For example in particular embodiments, the engine 100 includes twelve (12) fan blades 108 and ten (10) vanes 112. In other embodiments, the vane assembly 110 includes a greater quantity of vanes 112 to fan blades 108. For example in particular embodiments, the engine 100 includes ten (10) fan blades 108 and twenty-three (23) vanes 112.

In certain embodiments, such as depicted in FIG. 1, the vane assembly 110 is positioned downstream or aft of the fan assembly 104. However, it should be appreciated that in some embodiments, the vane assembly 110 may be positioned upstream or forward of the fan assembly 104. In still various embodiments, the engine 100 may include a first vane assembly positioned forward of the fan assembly 104 and a second vane assembly positioned aft of the fan assembly 104. The fan assembly 104 may be configured to desirably adjust pitch at one or more fan blades 108, such as to control thrust vector, abate or re-direct noise, and/or alter thrust output. The vane assembly 110 may be configured to desirably adjust pitch at one or more vanes 112, such as to control thrust vector, abate or re-direct noise, and/or alter thrust output. Pitch control mechanisms at one or both of the fan assembly 104 or the vane assembly 110 may co-operate to produce one or more desired effects described above.

In certain embodiments, such as depicted in FIG. 1, the engine 100 is an un-ducted thrust producing system, such that the plurality of fan blades 108 is unshrouded by a nacelle or fan casing. As such, in various embodiments, the engine 100 may be configured as an unshrouded turbofan engine, an open rotor engine, or a propfan engine. In particular embodiments, the engine 100 is an unducted rotor engine with a single row of fan blades 108. The fan blades 108 can have a large diameter, such as may be suitable for high bypass ratios, high cruise speeds (e.g., comparable to aircraft with turbofan engines, or generally higher cruise speed than aircraft with turboprop engines), high cruise altitude (e.g., comparable to aircraft with turbofan engines, or generally higher cruise speed than aircraft with turboprop engines), and/or relatively low rotational speeds.

The fan blades 108 comprise a diameter (Dfan). It should be noted that for purposes of illustration only half of the D_{fan} is shown (i.e., the radius of the fan). The fan tip diameter (D_{fan}) can be within a range of 8-20 feet. For example, in some embodiments, the D_{fan} is 10-16 feet. In particular embodiments the D_{fan} is 11-14 feet. In certain embodiments, the D_{fan} is 12-13 feet.

In some embodiments, the fan blade tip speed at a cruise flight condition can be 500 to 900 feet per second (fps), or 700 to 800 fps. The fan can rotate at 400-1200 rpm (or 450-1000 rpm) at a cruise flight condition. A fan pressure ratio (FPR) for the fan assembly 104 can be 1.04 to 1.10, or in some embodiments 1.05 to 1.08, as measured across the fan blades at a cruise flight condition.

The fans disclosed herein can comprise a solidity. Solidity is based on average blade chord defined as the blade planform area (surface area on one side of a blade) divided by the blade radial span. The solidity is directly proportional to the number of blades and chord length and inversely proportional to the diameter. For purposes of this disclosure, solidity is equal to the average blade chord (C) times the number of fan blades (N) divided by the product of two (2) times pi (π) times a reference radius (R_ref), which herein is a radius equal to 0.75 times a tip radius of a rotor blade (Rt) (i.e., C × N / (2 × π × R_ref)). Using this formula, a fan can comprise a solidity between 0.5 and 1.0, or more particularly between 0.6 and 1. In other examples, a fan can comprise a solidity between 1.1 and 1.5, or 1.1-1.3 in certain examples.

Cruise altitude is generally an altitude at which an aircraft levels after climb and prior to descending to an approach flight phase. In various embodiments, the engine is applied to a vehicle with a cruise altitude up to approximately 65,000 ft. In certain embodiments, cruise altitude is between approximately 28,000 ft. and approximately 45,000 ft. In certain embodiments, a cruise speed is within a range of about 0.6-0.9 Mach (or optionally about 0.7-0.9 Mach). In certain embodiments, cruise altitude is expressed in flight levels (FL) based on a standard air pressure at sea level, in which a cruise flight condition is between FL280 and FL650. In another embodiment, cruise flight condition is between FL280 and FL450. In certain embodiments, cruise altitude is defined based at least on a barometric pressure, in which cruise altitude is between approximately 4.85 psia and approximately 0.82 psia based on a sea-level pressure of approximately 14.70 psia and sea-level temperature at approximately 59 degrees Fahrenheit. In another embodiment, cruise altitude is between approximately 4.85 psia and approximately 2.14 psia. It should be appreciated that in certain embodiments, the ranges of cruise altitude defined by pressure may be adjusted based on a different reference sea-level pressure and/or sea-level temperature.

The core engine 106 is generally encased in outer casing 114 defining one half of a core diameter (Dcore), which may be thought of as the maximum extent from the centerline axis (datum for R). In certain embodiments, the engine 100 includes a length (L) from a longitudinally (or axial) forward end 116 to a longitudinally aft end 118. In various embodiments, the engine 100 defines a ratio of L/D_{core} that provides for reduced installed drag. In one embodiment, L/D_{core} is at least 2. In another embodiment, L/D_{core} is at least 2.5. In some embodiments, the L/Dcore is less than 5, less than 4, and less than 3. In various embodiments, it should be appreciated that the L/Dcore is for a single unducted rotor engine.

The reduced installed drag may further provide for improved efficiency, such as improved specific fuel consumption. Additionally, or alternatively, the reduced drag may provide for cruise altitude engine and aircraft operation at or above Mach 0.5. In certain embodiments, the L/Dcore, the fan assembly 104, and/or the vane assembly 110 separately or together configure, at least in part, the engine 100 to operate at a maximum cruise altitude operating speed between approximately Mach 0.55 and approximately Mach 0.85; or between approximately 0.72 to 0.85 or between approximately 0.75 to 0.85. For example, the engine 100 can be configured to operate at a maximum cruise altitude operating speed between approximately Mach 0.6 and approximately Mach 0.9.

Referring still to FIG. 1, the core engine 106 extends in a radial direction (R) relative to an engine centerline axis 120. The gear assembly 102 receives power or torque from the core engine 106 through a power input source 122 and provides power or torque to drive the fan assembly 104, in a circumferential direction C about the engine centerline axis 120, through a power output source 124.

The gear assembly 102 of the engine 100 can include a plurality of gears, including an input and an output. The gear assembly can also include one or more intermediate gears disposed between and/or interconnecting the input and the output. The input can be coupled to a turbine section of the core engine 106 and can comprise a first rotational speed. The output can be coupled to the fan assembly and can have a second rotational speed. In some embodiments, a gear ratio of the first rotational speed to the second rotational speed is greater than 4.1 (e.g., within a range of 4.1-14.0).

The gear assembly 102 (which can also be referred to as "a gearbox") can comprise various types and/or configuration. For example, in some embodiments, the gearbox is an epicyclic gearbox configured in a star gear configuration. Star gear configurations comprise a sun gear, a plurality of star gears (which can also be referred to as "planet gears"), and a ring gear. The sun gear is the input and is coupled to the power turbine (e.g., the low-pressure turbine) such that the sun gear and the power turbine rotate at the same rotational speed. The star gears are disposed between and interconnect the sun gear and the ring gear. The star gears are rotatably coupled to a fixed carrier. As such, the star gears can rotate about their respective axes but cannot collectively orbit relative to the sun gear or the ring gear. As another example, the gearbox is an epicyclic gearbox configured in a planet gear configuration. Planet gear configurations comprise a sun gear, a plurality of planet gears, and a ring gear. The sun gear is the input and is coupled to the power turbine. The planet gears are disposed between and interconnect the sun gear and the ring gear. The planet gears are rotatably coupled to a rotatable carrier. As such, the planet gears can rotate about their respective axes and also collectively rotate together with the carrier relative to the sun gear and the ring gear. The carrier is the output and is coupled to the fan assembly. The ring gear is fixed from rotation.

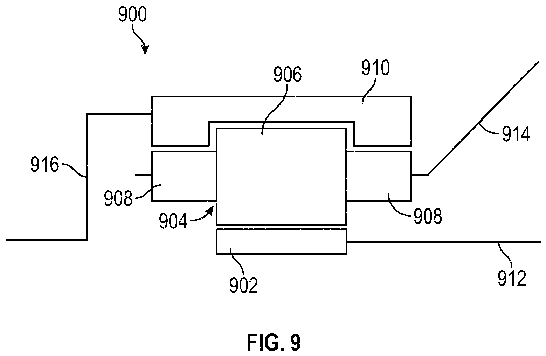

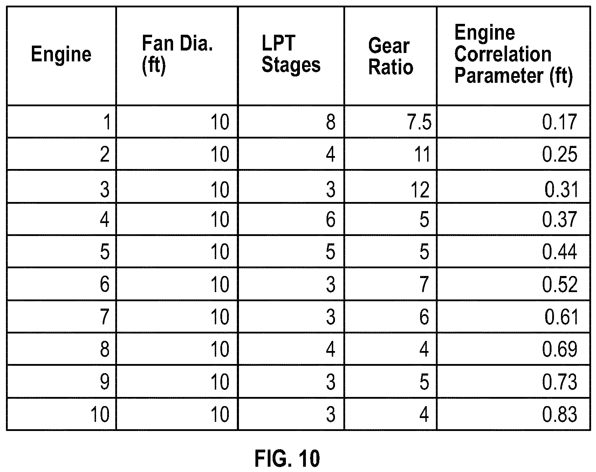

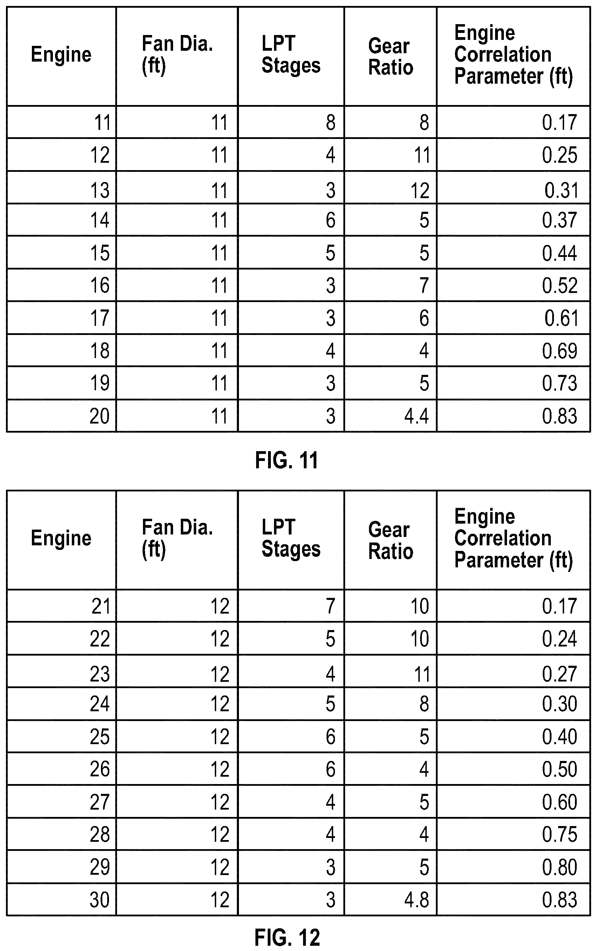

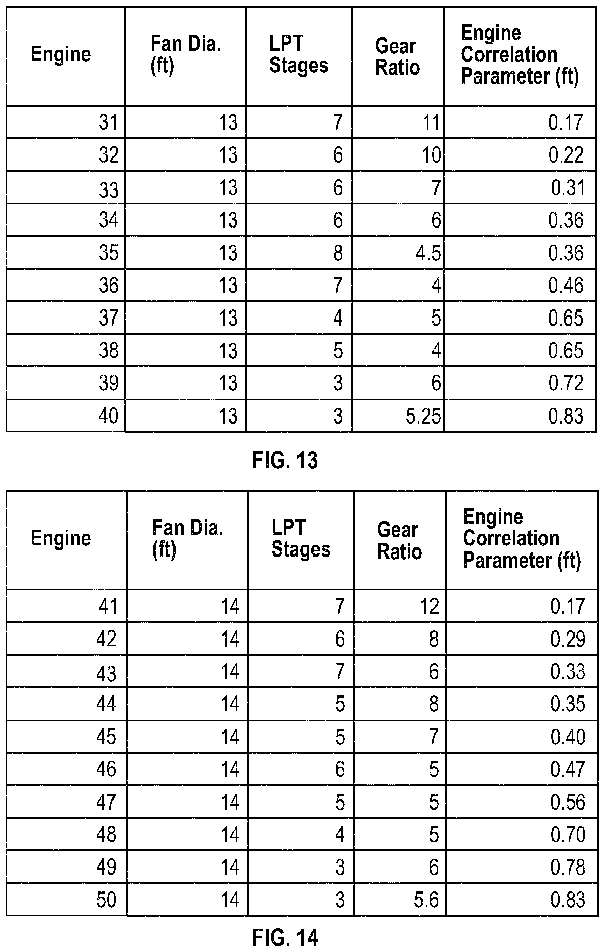

In some embodiments, the gearbox is a single-stage gearbox (e.g., FIGS. 10-11). In other embodiments, the gearbox is a multi-stage gearbox (e.g., FIGS. 9 and 12). In some embodiments, the gearbox is an epicyclic gearbox. In some embodiments, the gearbox is a non-epicyclic gearbox (e.g., a compound gearbox - FIG. 13).

As noted above, the gear assembly can be used to reduce the rotational speed of the output relative to the input. In some embodiments, a gear ratio of the input rotational speed to the output rotational speed is greater than 4.1. For example, in particular embodiments, the gear ratio is within a range of 4.1-14.0, within a range of 4.5-14.0, or within a range of 6.0-14.0. In certain embodiments, the gear ratio is within a range of 4.5-12 or within a range of 6.0-11.0. As such, in some embodiments, the fan assembly can be configured to rotate at a rotational speed of 400-1500 rpm at a cruise flight condition, while the power turbine (e.g., the low-pressure turbine) is configured to rotate at a rotational speed of 2,500-15,000 rpm at a cruise flight condition. In particular embodiments, the fan assembly can be configured to rotate at a rotational speed of 450-1200 rpm at a cruise flight condition, while the power turbine is configured to rotate at a rotational speed of 5,000-10,000 rpm at a cruise flight condition.

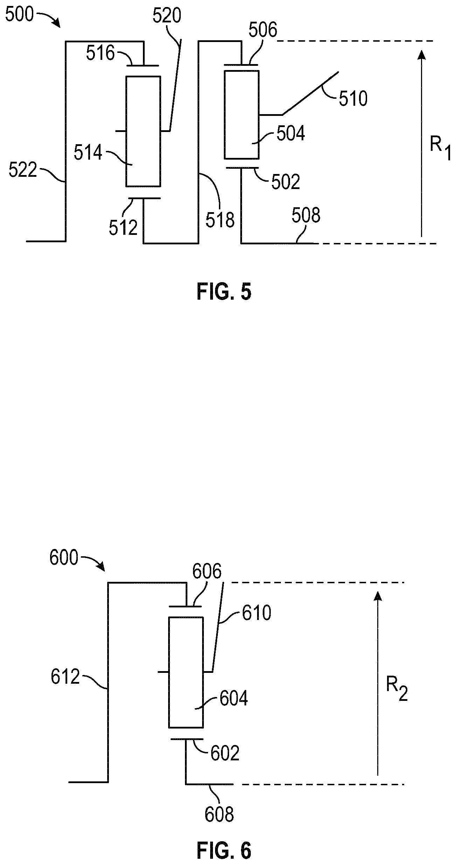

Various gear assembly configurations are depicted schematically in FIGS. 5-9. These gearboxes can be used any of the engines disclosed herein, including the engine 100. Additional details regarding the gearboxes are provided below.

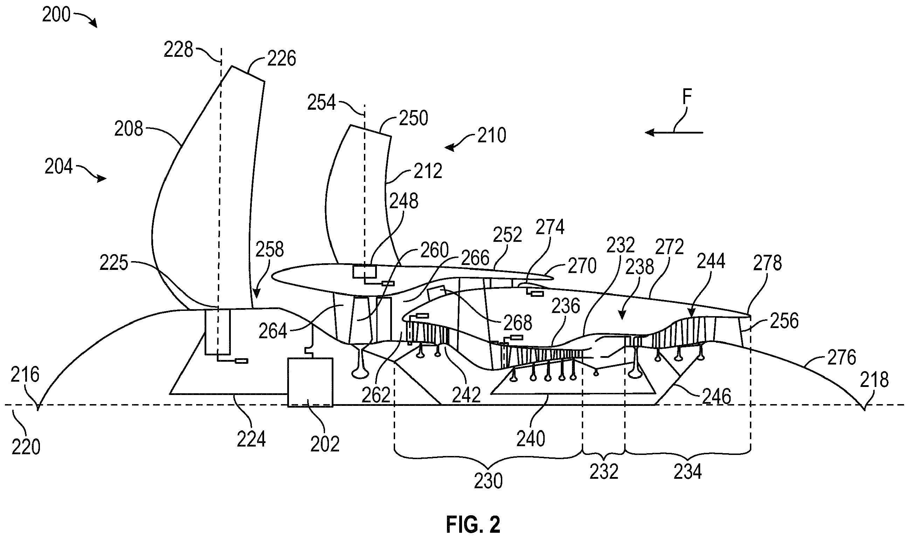

FIG. 2 shows a cross-sectional view of an engine 200, which is configured as an exemplary embodiment of an open rotor propulsion engine. The engine 200 is generally similar to the engine 100 and corresponding components have been numbered similarly. For example, the gear assembly of the engine 100 is numbered "102" and the gear assembly of the engine 200 is numbered "202," and so forth. In addition to the gear assembly 202, the engine 200 comprises a fan assembly 204 that includes a plurality of fan blades 208 distributed around the engine centerline axis 220. Fan blades 208, in some instances, are circumferentially arranged in an equally spaced relation around the engine centerline axis 220, and each fan blade 208 has a root 225 and a tip 226, and an axial span defined therebetween, as well as a central blade axis 228. In other instances, the fan blades can be non-equally spaced.

The core engine 206 includes a compressor section 230, a combustion section 232, and a turbine section 234 (which may be referred to as "an expansion section") together in a serial flow arrangement. The core engine 206 extends circumferentially relative to an engine centerline axis 220. The core engine 206 includes a high-speed spool that includes a high-pressure compressor 236 and a high-pressure turbine 238 operably rotatably coupled together by a high-speed shaft 240. The combustion section 232 is positioned between the high-pressure compressor 236 and the high-pressure turbine 238.

The combustion section 232 may be configured as a deflagrative combustion section, a rotating detonation combustion section, a pulse detonation combustion section, and/or other appropriate heat addition system. The combustion section 232 may be configured as one or more of a rich-burn system or a lean-burn system, or combinations thereof. In still various embodiments, the combustion section 232 includes an annular combustor, a can combustor, a cannular combustor, a trapped vortex combustor (TVC), or other appropriate combustion system, or combinations thereof.

The core engine 206 also includes a booster or low-pressure compressor positioned in flow relationship with the high-pressure compressor 236. The low-pressure compressor 242 is rotatably coupled with the low-pressure turbine 244 via a low-speed shaft 246 to enable the low-pressure turbine 244 to drive the low-pressure compressor 242. The low-speed shaft 246 is also operably connected to the gear assembly 202 to provide power to the fan assembly 204, such as described further herein.

It should be appreciated that the terms "low" and "high," or their respective comparative degrees (e.g., "lower" and "higher", where applicable), when used with compressor, turbine, shaft, or spool components, each refer to relative pressures and/or relative speeds within an engine unless otherwise specified. For example, a "low spool" or "low-speed shaft" defines a component configured to operate at a rotational speed, such as a maximum allowable rotational speed, lower than a "high spool" or "high-speed shaft" of the engine. Alternatively, unless otherwise specified, the aforementioned terms may be understood in their superlative degree. For example, a "low turbine" or "low-speed turbine" may refer to the lowest maximum rotational speed turbine within a turbine section, a "low compressor" or "low speed compressor" may refer to the lowest maximum rotational speed turbine within a compressor section, a "high turbine" or "high-speed turbine" may refer to the highest maximum rotational speed turbine within the turbine section, and a "high compressor" or "high-speed compressor" may refer to the highest maximum rotational speed compressor within the compressor section. Similarly, the low-speed spool refers to a lower maximum rotational speed than the high-speed spool. It should further be appreciated that the terms "low" or "high" in such aforementioned regards may additionally, or alternatively, be understood as relative to minimum allowable speeds, or minimum or maximum allowable speeds relative to normal, desired, steady state, etc. operation of the engine.

The compressors and/or turbines disclosed herein can include various stage counts. As disclosed herein the stage count includes the number of rotors or blade stages in a particular component (e.g., a compressor or turbine). For example, in some embodiments, a low-pressure compressor can comprise 1-8 stages, a high-pressure compressor can comprise 8-15 stages, a high-pressure turbine comprises 1-2 stages, and/or a low-pressure turbine comprises 3-8 stages (or optionally 4-8 LPT stages, or optionally 4-6 LPT stages). For example, in certain embodiments, an engine can comprise a one stage low-pressure compressor, an 11 stage high-pressure compressor, a two stage high-pressure compressor, and a 7 stage low-pressure turbine. As another example, an engine can comprise a three stage low-pressure compressor, a 10 stage high-pressure compressor, a two stage high-pressure compressor, and a 7 stage low-pressure turbine. As yet another example, an engine can comprise a three stage low-pressure compressor, a 10 stage high-pressure compressor, a two stage high-pressure compressor, and a 4 stage low-pressure turbine.

In some embodiments, a low-pressure turbine is a counter-rotating low-pressure turbine comprising inner blade stages and outer blade stages. The inner blade stages extend radially outwardly from an inner shaft, and the outer blade stages extend radially inwardly from an outer drum. In particular embodiments, the counter-rotating low-pressure turbine comprises three inner blade stages and three outer blade stages, which can collectively be referred to as a six stage low-pressure turbine. In other embodiments, the counter-rotating low-pressure turbine comprises four inner blade stages and three outer blade stages, which can be collectively be referred to as a seven stage low-pressure turbine.

As discussed in more detail below, the core engine 206 includes the gear assembly 202 that is configured to transfer power from the turbine section 234 and reduce an output rotational speed at the fan assembly 204 relative to the low-pressure turbine 244. Embodiments of the gear assembly 202 depicted and described herein can allow for gear ratios suitable for large-diameter unducted fans (e.g., gear ratios of 4.1-14.0, 4.5-14.0, and/or 6.0-14.0). Additionally, embodiments of the gear assembly 202 provided herein may be suitable within the radial or diametrical constraints of the core engine 206 within the outer casing 214.

Various gearbox configurations are depicted schematically in FIGS. 5-9. These gearboxes can be used in any of the engines disclosed herein, including the engine 200. Additional details regarding the gearboxes are provided below.

Engine 200 also includes a vane assembly 210 comprising a plurality of vanes 212 disposed around engine centerline axis 220. Each vane 212 has a root 248 and a tip 250, and a span defined therebetween. Vanes 212 can be arranged in a variety of manners. In some embodiments, for example, they are not all equidistant from the rotating assembly.

In some embodiments, vanes 212 are mounted to a stationary frame and do not rotate relative to the engine centerline axis 220, but may include a mechanism for adjusting their orientation relative to their axis 254 and/or relative to the fan blades 208. For reference purposes, FIG. 2 depicts a forward direction denoted with arrow F, which in turn defines the forward and aft portions of the system.

As depicted in FIG. 2, the fan assembly 204 is located forward of the core engine 106 with the exhaust 256 located aft of core engine 206 in a "puller" configuration. Other configurations are possible and contemplated as within the scope of the present disclosure, such as what may be termed a "pusher" configuration embodiment where the engine core is located forward of the fan assembly. The selection of "puller" or "pusher" configurations may be made in concert with the selection of mounting orientations with respect to the airframe of the intended aircraft application, and some may be structurally or operationally advantageous depending upon whether the mounting location and orientation are wing-mounted, fuselage-mounted, or tailmounted configurations.

Left- or right-handed engine configurations, useful for certain installations in reducing the impact of multi-engine torque upon an aircraft, can be achieved by mirroring the airfoils (e.g., 208, 212) such that the fan assembly 204 rotates clockwise for one propulsion system and counterclockwise for the other propulsion system. Alternatively, an optional reversing gearbox can be provided to permits a common gas turbine core and low-pressure turbine to be used to rotate the fan blades either clockwise or counterclockwise, i.e., to provide either left- or right-handed configurations, as desired, such as to provide a pair of oppositely-rotating engine assemblies can be provided for certain aircraft installations while eliminating the need to have internal engine parts designed for opposite rotation directions.

The engine 200 also includes the gear assembly 202 which includes a gear set for decreasing the rotational speed of the fan assembly 204 relative to the low-pressure turbine 244. In operation, the rotating fan blades 208 are driven by the low-pressure turbine 244 via gear assembly 202 such that the fan blades 208 rotate around the engine centerline axis 220 and generate thrust to propel the engine 200, and hence an aircraft on which it is mounted, in the forward direction F.

In some embodiments, a gear ratio of the input rotational speed to the output rotational speed is greater than 4.1. For example, in particular embodiments, the gear ratio is within a range of 4.1-14.0, within a range of 4.5-14.0, or within a range of 6.0-14.0. In certain embodiments, the gear ratio is within a range of 4.5-12 or within a range of 6.0-11.0. As such, in some embodiments, the fan assembly can be configured to rotate at a rotational speed of 400-1500 rpm at a cruise flight condition, while the power turbine (e.g., the low-pressure turbine) is configured to rotate at a rotational speed of 5,000-10,000 rpm at a cruise flight condition. In particular embodiments, the fan assembly can be configured to rotate at a rotational speed of 450-1200 rpm at a cruise flight condition, while the power turbine is configured to rotate at a rotational speed of 5,500-9,500 rpm a cruise flight condition.

It may be desirable that either or both of the fan blades 208 or the vanes 212 to incorporate a pitch change mechanism such that the blades can be rotated with respect to an axis of pitch rotation (annotated as 228 and 254, respectively) either independently or in conjunction with one another. Such pitch change can be utilized to vary thrust and/or swirl effects under various operating conditions, including to provide a thrust reversing feature which may be useful in certain operating conditions such as upon landing an aircraft.

Vanes 212 can be sized, shaped, and configured to impart a counteracting swirl to the fluid so that in a downstream direction aft of both fan blades 208 and vanes 212 the fluid has a greatly reduced degree of swirl, which translates to an increased level of induced efficiency. Vanes 212 may have a shorter span than fan blades 208, as shown in FIG. 2. For example, vanes 212 may have a span that is at least 50% of a span of fan blades 208. In some embodiments, the span of the vanes can be the same or longer than the span as fan blades 208, if desired. Vanes 212 may be attached to an aircraft structure associated with the engine 200, as shown in FIG. 2, or another aircraft structure such as a wing, pylon, or fuselage. Vanes 212 may be fewer or greater in number than, or the same in number as, the number of fan blades 208. In some embodiments, the number of vanes 212 are greater than two, or greater than four, in number. Fan blades 208 may be sized, shaped, and contoured with the desired blade loading in mind.

In the embodiment shown in FIG. 2, an annular 360-degree inlet 258 is located between the fan assembly 204 and the vane assembly 210, and provides a path for incoming atmospheric air to enter the core engine 206 radially inwardly of at least a portion of the vane assembly 210. Such a location may be advantageous for a variety of reasons, including management of icing performance as well as protecting the inlet 258 from various objects and materials as may be encountered in operation.

In the exemplary embodiment of FIG. 2, in addition to the open rotor or unducted fan assembly 204 with its plurality of fan blades 208, an optional ducted fan assembly 260 is included behind fan assembly 204, such that the engine 200 includes both a ducted and an unducted fan which both serve to generate thrust through the movement of air at atmospheric temperature without passage through the core engine 206. The ducted fan assembly 260 is shown at about the same axial location as the vane 212, and radially inward of the root 248 of the vane 212. Alternatively, the ducted fan assembly 260 may be between the vane 212 and core duct 262, or be farther forward of the vane 212. The ducted fan assembly 260 may be driven by the low-pressure turbine 244, or by any other suitable source of rotation, and may serve as the first stage of the low-pressure compressor 242 or may be operated separately. Air entering the inlet 258 flows through an inlet duct 264 and then is divided such that a portion flows through a core duct 262 and a portion flows through a fan duct 266. Fan duct 266 may incorporate one or more heat exchangers 268 and exhausts to the atmosphere through an independent fixed or variable nozzle 270 aft of the vane assembly 210, at the aft end of the fan cowl 252 and outside of the engine core cowl 272. Air flowing through the fan duct 266 thus "bypasses" the core of the engine and does not pass through the core.

Thus, in the exemplary embodiment, engine 200 includes an unducted fan formed by the fan blades 208, followed by the ducted fan assembly 260, which directs airflow into two concentric or non-concentric ducts 262 and 266, thereby forming a "three-stream engine architecture" with three paths for air which passes through the fan assembly 204. The "first stream" of the engine 200 comprises airflow that passes through the vane assembly 210 and/or outside the fan cowl 252. As such, the first stream can be referred to as "the bypass stream" since the airflow of the first stream does not pass through the core duct 262. The first stream produces the majority of the thrust of the engine 200 and can thus also be referred to as "the primary propulsion stream." The "second stream" of the engine 200 comprises the airflow that flows into the inlet 258, through the inlet duct 264, through the core duct 262, and exits the core nozzle 278. In this manner, the second stream can be referred to as "the core stream." The "third stream" of the engine 200 comprises the airflow that flows into the inlet 258, through the inlet duct 264, through the fan duct 266, and exits the nozzle 270.

A "third stream" as used herein means a secondary air stream capable of increasing fluid energy to produce a minority of the total thrust of an engine (e.g., the engine 200). Accordingly, in various embodiments, the fan duct 266, having the one or heat exchangers 268 located within the flowpath of the fan duct 266, may be referred to as the "third-stream" of the three-stream engine architecture.

The pressure ratio of the third stream is higher than that of the primary propulsion stream (i.e., the bypass stream). This thrust is produced through a dedicated nozzle (e.g., the nozzle 270) or through mixing of the third stream with a fan stream or a core stream (e.g., into a common nozzle). In certain exemplary embodiments the operating temperature of an airflow through the third stream is less than a maximum compressor discharge temperature for the engine, and more specifically may be less than 350 degrees Fahrenheit (such as less than 300 degrees Fahrenheit, such as less than 250 degrees Fahrenheit, such as less than 200 degrees Fahrenheit, and at least as great as an ambient temperature). In certain exemplary embodiments these operating temperatures facilitate the heat transfer to or from the fluid in the third stream and a secondary fluid stream. Further, in certain exemplary embodiments, the airflow through the third stream may contribute less than 50% of the total engine thrust (and at least, e.g., 2% of the total engine thrust), and at a takeoff condition, or more particularly while operating at a rated takeoff power at sea level, static flight speed, 86 degree Fahrenheit ambient temperature operating conditions. Furthermore, in certain exemplary embodiments the airstream, mixing, or exhaust properties (and thereby the aforementioned exemplary percent contribution to total thrust) of the third stream may passively adjust during engine operation or be modified purposefully through use of engine control features (such as fuel flow, electric machine power, variable stators, variable inlet guide vanes, valves, variable exhaust geometry, or fluidic features) to adjust or optimize overall system performance across a broad range of potential operating conditions.

In the exemplary embodiment shown in FIG. 2, a slidable, moveable, and/or translatable plug nozzle 274 with an actuator may be included in order to vary the exit area of the nozzle 270. A plug nozzle is typically an annular, symmetrical device which regulates the open area of an exit such as a fan stream or core stream by axial movement of the nozzle such that the gap between the nozzle surface and a stationary structure, such as adjacent walls of a duct, varies in a scheduled fashion thereby reducing or increasing a space for airflow through the duct. Other suitable nozzle designs may be employed as well, including those incorporating thrust reversing functionality. Such an adjustable, moveable nozzle may be designed to operate in concert with other systems such as VBV's, VSV's, or blade pitch mechanisms and may be designed with failure modes such as fully-open, fully-closed, or intermediate positions, so that the nozzle 270 has a consistent "home" position to which it returns in the event of any system failure, which may prevent commands from reaching the nozzle 270 and/or its actuator. In other embodiments, a static nozzle may be utilized.

In some embodiments, a mixing device 276 can be included in a region aft of a core nozzle 278 to aid in mixing the fan stream and the core stream to improve acoustic performance by directing core stream outward and fan stream inward.

Since the engine 200 shown in FIG. 2 includes both an open rotor fan assembly 204, a ducted fan assembly 260, and the third stream, the engine's thrust output and work split can be tailored to achieve specific thrust, fuel burn, thermal management, and/or acoustic signature objectives which may be superior to those of a typical ducted or unducted fan gas turbine propulsion assembly of comparable thrust class.

Operationally, the engine 200 may include a control system that manages the loading of the respective open and ducted fans, as well as potentially the exit area of the variable fan nozzle, to provide different thrust, noise, cooling capacity and other performance characteristics for various portions of the flight envelope and various operational conditions associated with aircraft operation. For example, in climb mode the ducted fan may operate at maximum pressure ratio there-by maximizing the thrust capability of stream, while in cruise mode, the ducted fan may operate a lower pressure ratio, raising overall efficiency through reliance on thrust from the unducted fan. Nozzle actuation modulates the ducted fan operating line and overall engine fan pressure ratio independent of total engine airflow. In other embodiments, loading may be managed using a static nozzle.

As noted above, the third stream (e.g., the fan duct 266) may include one or more heat exchangers 268 for removing heat from various fluids used in engine operation (such as an aircooled oil cooler (ACOC), cooled cooling air (CCA), etc.). Heat exchangers 268 located in the third stream take advantage of the integration into the fan duct 266 (i.e., the third stream) with reduced performance penalties (such as fuel efficiency and thrust) compared with traditional ducted fan architectures, due to not impacting the primary source of thrust which is, in this case, the unducted fan stream. Heat exchangers may cool fluids such as gearbox oil, engine sump oil, thermal transport fluids such as supercritical fluids or commercially available single-phase or two-phase fluids (supercritical CO2, EGV, Slither 800, liquid metals, etc.), engine bleed air, etc. Heat exchangers may also be made up of different segments or passages that cool different working fluids, such as an ACOC paired with a fuel cooler. Heat exchangers 268 may be incorporated into a thermal management system which provides for thermal transport via a heat exchange fluid flowing through a network to remove heat from a source and transport it to a heat exchanger.

Since the fan pressure ratio associated with the third stream is higher for the ducted fan than for the unducted fan, the third stream may provide an environment where more compact heat exchangers may be utilized than would be possible if installed on the outside of the core cowl in the unducted fan stream. Fan bypass air is at a very low fan pressure ratio (FPR) (1.05 to 1.08), making it difficult to drive air through heat exchangers. Without the availability of a fan duct as described herein, scoops or booster bleed air may be required to provide cooling air to and through heat exchangers.

The third stream can also provide other advantages in terms of reduced nacelle drag, enabling a more aggressive nacelle close-out, improved core stream particle separation, and inclement weather operation. By exhausting the fan duct flow over the core cowl, this aids in energizing the boundary layer and enabling the option of a steeper nacelle close out angle between the maximum dimension of the engine core cowl 272 and the exhaust 256. The close-out angle is normally limited by air flow separation, but boundary layer energization by air from the fan duct 266 exhausting over the core cowl reduces air flow separation. This yields a shorter, lighter structure with less frictional surface drag.

The vane assembly can be shrouded or unshrouded (as shown in FIGS. 1 and 2). Although not shown, an optional annular shroud or duct can be coupled to the vane assembly 210 and located distally from the engine centerline axis 220 relative to the vanes 212. In addition to the noise reduction benefit, the duct may provide improved vibratory response and structural integrity of the vanes 212 by coupling them into an assembly forming an annular ring or one or more circumferential sectors, i.e., segments forming portions of an annular ring linking two or more of the vanes 212. The duct may also allow the pitch of the vanes to be varied more easily.

In some embodiments, the net thrust T of the engine is within a range of about 10,000-100,000 pounds force at a max takeoff condition. In particular embodiments, the net thrust T of the engine is within a range of about 12,000-35,000 pounds force at a max takeoff condition.

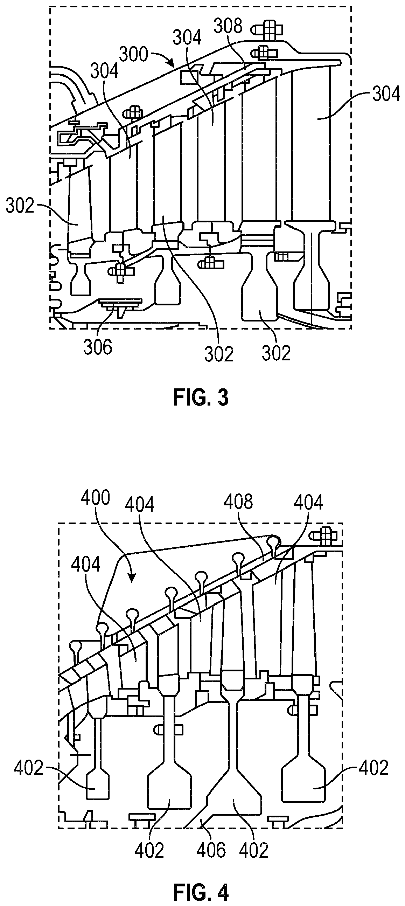

In some embodiments, an engine (e.g., the engine 100 and/or the engine 200) can comprise a counter-rotating low-pressure turbine. For example, FIGS. 3-4 depict schematic cross-sectional illustrations of counter-rotating low-pressure turbines. In particular, FIG. 3 depicts a counter-rotating turbine 300, and FIG. 4 depicts a counter-rotating turbine 400. The counter-rotating turbines comprise inner blade stages and outer blade stages arranged in an alternating inner-outer configuration. In other words, the counter-rotating turbines do not comprise stator vanes disposed between the blade stages.

Referring to FIG. 3, the counter-rotating turbine 300 comprises a plurality of inner blade stages 302 and a plurality of outer blade stages 304. More specifically, the counter-rotating turbine 300 includes three inner blades stages 302 that are coupled to and extend radially outwardly from an inner shaft 306 (which can also be referred to as "an inner rotor") and three outer blade stages 304 that are coupled to extend radially inwardly from an outer shaft 308 (which can also be referred to as "an outer drum" or "an outer rotor"). In this manner, the counter-rotating turbine 300 can be considered a six stage turbine.

Referring to FIG. 4, the counter-rotating turbine 400 comprises a plurality of inner blade stages 402 and a plurality of outer blade stages 404. More specifically, the counter-rotating turbine 400 includes four inner blades stages 402 that are coupled to and extend radially outwardly from an inner shaft 406 and three outer blade stages 404 that are coupled to extend radially inwardly from an outer shaft 408. In this manner, the counter-rotating turbine 400 can be considered a seven stage turbine.

According to some embodiments there is a turbomachinery characterized by a high gear ratio. A high gear ratio gearbox means a gearbox with a gear ratio of above about 4:1 to about 14:1 (or about 4.5:1 to about 12:1 in particular embodiments). For example, the engines disclosed herein can include a gearbox configured such the output speed (i.e., the speed of the propulsor) is about 400-1200 rpm at a cruise flight condition, or more particularly 450-1000 rpm at a cruise flight condition.

Various exemplary gear assemblies are shown and described herein. In particular, FIGS. 5-9 schematically depict several exemplary gear assemblies that can be used with the engines 100, 200. The disclosed gear assemblies may be utilized with any of the exemplary engines and/or any other suitable engine for which such gear assemblies may be desirable. In such a manner, it will be appreciated that the gear assemblies disclosed herein may generally be operable with an engine having a rotating element with a plurality of rotor blades and a turbomachinery having a turbine and a shaft rotatable with the turbine. With such an engine, the rotating element (e.g., fan assembly 104) may be driven by the shaft (e.g., low-speed shaft) of the turbomachinery through the gear assembly.

Although the exemplary gear assemblies shown are mounted at a forward location (e.g., forward from the combustor and/or the low-pressure compressor), in other embodiments, the gear assemblies described herein can be mounted at a aft location (e.g., aft of the combustor and/or the low-pressure turbine).

Various embodiments of the gear assembly provided herein may allow for gear ratios of up to 14:1. Still various embodiments of the gear assemblies provided herein may allow for gear ratios of at least 4.1:1 or 4.5:1. Still yet various embodiments of the gear assemblies provided herein allow for gear ratios of 6:1 to 12:1.

FIG. 5 schematically depicts a gearbox 500 that can be used, for example, engines 100, 200. The gearbox 500 comprises a two-stage star configuration.

The first stage of the gearbox 500 includes a first-stage sun gear 502, a first-stage carrier 504 housing a plurality of first-stage star gears, and a first-stage ring gear 506. The first-stage sun gear 502 can be coupled to a low-speed shaft 508, which in turn is coupled to the low-pressure turbine the engine. The first-stage sun gear 502 can mesh with the first-stage star gears, which mesh with the first-stage ring gear. The first-stage carrier 504 can be fixed from rotation by a support member 510.

The second stage of the gearbox 500 includes a second-stage sun gear 512, a second-stage carrier 514 housing a plurality of second-stage star gears, and a second-stage ring gear 516. The second-stage sun gear 512 can be coupled to a shaft 518 which in turn is coupled to the first-stage ring gear 506. The second-stage carrier 514 can be fixed from rotation by a support member 520. The second-stage ring gear 516 can be coupled to a fan shaft 522.

In some embodiments, each stage of the gearbox 500 can comprise five star gears. In other embodiments, the gearbox 500 can comprise fewer or more than five star gears in each stage. In some embodiments, the first-stage carrier can comprise a different number of star gears than the second-stage carrier. For example, the first-carrier can comprise five star gears, and the second-stage carrier can comprise three star gears, or vice versa.

In some embodiments, the radius Ri of the gearbox 500 can be about 16-19 inches. In other embodiments, the radius R₁ of the gearbox 500 can be about 22-24 inches. In other embodiments, the radius R₁ of the gearbox 500 can be smaller than 16 inches or larger than 24 inches.

FIG. 6 schematically depicts a gearbox 600 that can be used with the engines disclosed herein. The gearbox 600 comprises a single-stage star configuration. The gearbox 600 includes a sun gear 602, a carrier 604 housing a plurality of star gears (e.g., 3-5 star gears), and a ring gear 606. The sun gear 602 can mesh with the star gears, and the star gears can mesh with the ring gear 606. The sun gear 602 can be coupled to a low-speed shaft 608, which in turn is coupled to the low-pressure turbine of the engine. The carrier 604 can be fixed from rotation by a support member 610. The ring gear 606 can be coupled to a fan shaft 612.

In some embodiments, the radius R₂ of the gearbox 600 can be about 18-23 inches. In other embodiments, the radius R₂ of the gearbox 600 can be smaller than 18 inches or larger than 23 inches.

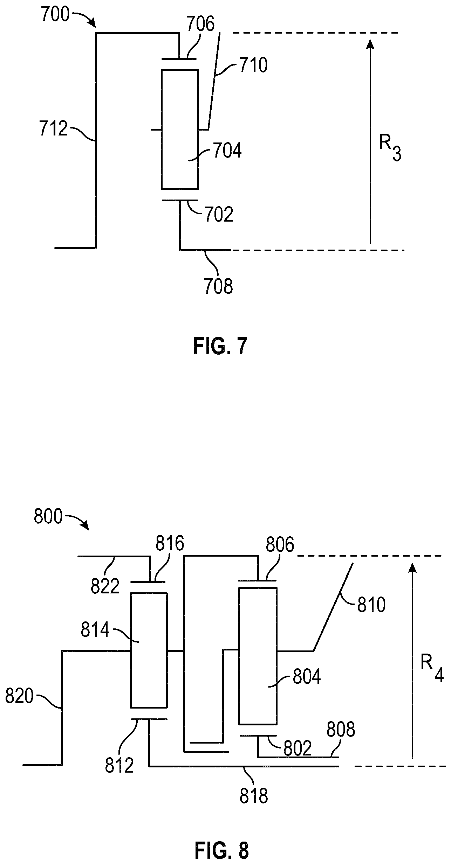

FIG. 7 schematically depicts another exemplary gearbox 700. The gearbox 700 comprises a single-stage star configuration. The gearbox 700 includes a sun gear 702, a carrier 704 housing a plurality of star gears (e.g., 3-5 star gears), and a ring gear 706. The sun gear 702 can mesh with the star gears, and the star gears can mesh with the ring gear 706. The sun gear 702 can be coupled to a low-speed shaft 708, which in turn is coupled to the low-pressure turbine of the engine. The carrier 704 can be fixed from rotation by a support member 710. The ring gear 706 can be coupled to a fan shaft 712.

The gearbox 700 can comprise a radius R₃. In some embodiments, the radius R₃ of the gearbox 700 can be about 10-13 inches. In other embodiments, the radius R₃ of the gearbox 700 can be smaller than 10 inches or larger than 13 inches.

FIG. 8 schematically depicts a gearbox 800 that can be used with the engines disclosed herein. The gearbox 800 comprises a two-stage configuration in which the first stage is a star configuration and the second stage is a planet configuration.

The first stage of the gearbox 800 includes a first-stage sun gear 802, a first-stage star carrier 804 comprising a plurality of first-stage star gears (e.g., 3-5 star gears), and a first-stage ring gear 806. The first-stage sun gear 802 can mesh with the first-stage star gears, and the first-stage star gears can mesh with the first-stage ring gear 806. The first-stage sun gear 802 can be coupled to a higher-speed shaft 808 of the low spool, which in turn is coupled to the inner blades of the low-pressure turbine of the engine. The first-stage star carrier 804 can be fixed from rotation by a support member 810.

The second stage of the gearbox 800 includes a second-stage sun gear 812, a second-stage planet carrier 814 comprising a plurality of second-stage planet gears (e.g., 3-5 planet gears), and a second-stage ring gear 816. The second-stage sun gear 812 can mesh with the second-stage planet gears. The second-stage planet carrier 814 can be coupled to the first-stage ring gear 806. The second-stage sun gear 812 can be coupled to a lower-speed shaft 818 of the low spool, which in turn is coupled to the outer blades of the low-pressure turbine of the engine. The second-stage planet carrier 814 can be coupled to the first-stage ring gear 806. The second-stage planet carrier 814 can also be coupled to a fan shaft 820. The second-stage ring gear 816 can be fixed from rotation by a support member 822.

In some embodiments, each stage of the gearbox 800 can comprise three star/planet gears. In other embodiments, the gearbox 800 can comprise fewer or more than three star/planet gears in each stage. In some embodiments, the first-stage carrier can comprise a different number of star gears than the second-stage carrier has planet gears. For example, the first-carrier can comprise five star gears, and the second-stage carrier can comprise three planet gears, or vice versa.

Since the first stage of the gearbox 800 is coupled to the higher-speed shaft 808 of the low spool and the second stage of the gearbox 800 is coupled to the lower-speed shaft 818 of the low spool, the gear ratio of the first stage of the gearbox 800 can be greater than the gear ratio of the second stage of the gearbox. For example, in certain embodiments, the first stage of the gearbox 800 can comprise a gear ratio of 4.1-14, and the second stage of the gearbox 800 can comprise a gear ratio that is less than the gear ratio of the first stage of the gearbox. In particular embodiments, the first stage of the gearbox 800 can comprise a gear ratio of 7, and the second stage of the gearbox 800 can comprise a gear ratio of 6.

In some embodiments, an engine comprising the gearbox 800 can be configured such that the higher-speed shaft 808 provides about 50% of the power to the gearbox 800 and the lower-speed shaft 818 provides about 50% of the power to the gearbox 800. In other embodiments, an engine comprising the gearbox 800 can be configured such that the higher-speed shaft 808 provides about 60% of the power to the gearbox 800 and the lower-speed shaft 818 provides about 40% of the power to the gearbox 800.

In some embodiments, a radius R₄ of the gearbox 800 can be about 18-22 inches. In other embodiments, the radius R₄ of the gearbox 800 can be smaller than 18 inches or larger than 22 inches.

FIG. 9 depicts a gearbox 900 that can be used, for example, with the engines disclosed herein (e.g., the engines 100, 200). The gearbox 900 is configured as a compound star gearbox. The gearbox 900 comprises a sun gear 902 and a star carrier 904, which includes a plurality of compound star gears having one or more first portions 906 and one or more second portions 908. The gearbox 900 further comprises a ring gear 910. The sun gear 902 can also mesh with the first portions 906 of the star gears. The star carrier can be fixed from rotation via a support member 914. The second portions 908 of the star gears can mesh with the ring gear 910. The sun gear 902 can be coupled to a low-pressure turbine via the turbine shaft 912. The ring gear 910 can be coupled to a fan shaft 916.

Each of the embodiments of turbomachinery disclosed herein utilize an open rotor (also referred to as an "unducted propulsor") and a gearbox. Adoption of a geared, open rotor engine presents unique challenges. One such challenge is finding the appropriate balance between engine performance, engine efficiency, propulsor sizing, and/or acoustics (e.g., noise). For example, if the propulsor is larger than a certain diameter, engine performance may be satisfactory, but the engine will not fit on the airframe. If the fan is smaller, engine performance may be less than desirable. If other criteria are met, the engine may still be too noisy to comply with regulations and/or would create a poor experience for individuals flying on the aircraft.

Starting from this basis, the inventors set out to calculate the various demands for an unducted propulsor. During the process of developing the aforementioned embodiments of turbomachinery incorporating an unducted propulsor and a gearbox, the inventors discovered, unexpectedly, that a good approximation for an overall geared, unducted propulsor engine design can be made using only a relatively few engine parameters. This development is based on, among other things, the recognition of a relationship between the propulsor, the LPT, and the gearbox. From this initial recognition and other developments that were the by-product of studying a plurality of engine configurations (including the configurations disclosed herein), the inventors ultimately discovered that a good approximation for overall engine performance, efficiency, sizing, and acoustics could be made based on a relationship among the fan diameter, the number of LPT stages, and the gear ratio of the gearbox. The inventors refer to this newly discovered relationship as an engine correlation parameter (ECP).

ECP is quite beneficial. For example, the ECP can provide an engine that is has adequate performance, efficiency, size, and acoustics. Therefore, the ECP can improve the process of developing an unducted engine, which can ultimately result in improved turbomachinery. For example, by defining the engine architecture using the ECP, a better appreciation may be gained for the affected systems or subsystems, reliability or feasibility, and/or range of possible architectures because the ECP imposes practical limits on designs under consideration.

The ECP is defined by the following relationship: D/N/GR, where D is the blade tip diameter measured in feet, where N is the stage count of the low-pressure turbine, and where GR is the gear ratio of the gearbox. The ECP can be used, for example, to configure an engine with greater efficiency and lower noise than typical engines. In some instances, the engines disclosed herein comprising the ECP are lighter, have greater propulsive efficiency, have greater engine efficiency, and/or are quieter than typical engines. The ECP thus provides improved turbomachinery engines and/or can help simplify one or more complexities of geared, open rotor engine development.

Specifically, the inventors of the present disclosure have appreciated that an ECP, equal to the propulsor blade tip diameter (in feet) divided by the gear ratio divided by the low pressure turbine stage count, between about 0.17 feet and about 0.83 feet for a single unducted rotor engine (e.g., the engines 100, 200) provide improved results during operation. More specifically, in at least certain examples, a single unducted rotor engine having an ECP between about 0.17 feet and about 0.63 feet may provide for desired results during operation. For simplity, a ECP value my be expressed as unitless value (i.e., omitting "feet"). For example, an ECP of 0.19 feet may simply be expressed as 0.19.

For instance, in one example, a geared, single unducted rotor engine can comprise a propulsor blade diameter of 18 feet, a gear ratio of 10:1, and an LPT stage count equal to 3. In such an example, the ECP is equal to 0.6.

As another example, a geared, single unducted rotor engine can comprise a propulsor blade diameter of 14 feet, may have a gear ratio of 7:1, and an LPT stage count equal to 5. In this example, the ECP is equal to 0.4.

FIGS. 10-16 depict tables with additional exemplary engines and their associated ECPs. The engines disclosed in the tables of FIGS. 10-16 (are elsewhere in this disclosure) are merely examples are not intended to limit the scope of the disclosure.

FIG. 10 depicts various engines (i.e., engines 1-10) each comprising a fan diameter of 10 feet. The LPT stages of each engine 1-10 is within a range of 3-8. The gear ratio of each engine 1-10 is within a range of 4-12. The ECP for each engine 1-10 is within a range of 0.17 and 0.83.

FIG. 11 depicts various engines (i.e., engines 11-20) each comprising a fan diameter of 11 feet. The LPT stages of each engine 11-20 is within a range of 3-8. The gear ratio of each engine 11-20 is within a range of 4-12. The ECP for each engine 11-20 is within a range of 0.17 and 0.83.

FIG. 12 depicts various engines (i.e., engines 21-30) comprising fan diameters of 12 feet. The LPT stages of engines 21-30 are within a range of 3-7. The gear ratios of engines 21-30 are within a range of 4-11. The ECPs for engines 21-30 are within a range of 0.17 and 0.83.

FIG. 13 depicts various engines (i.e., engines 31-40) each comprising a fan diameter of 13 feet. The LPT stages of each engine 31-40 is within a range of 3-8. The gear ratio of each engine 31-40 is within a range of 4-11. The ECP for each engine 31-40 is within a range of 0.17 and 0.83.

FIG. 14 depicts various engines (i.e., engines 41-50) comprising fan diameters of 14 feet. The LPT stages of engines 41-50 are within a range of 3-7. The gear ratios of engines 41-50 are within a range of 5-12. The ECPs for engines 41-50 are within a range of 0.17 and 0.83.

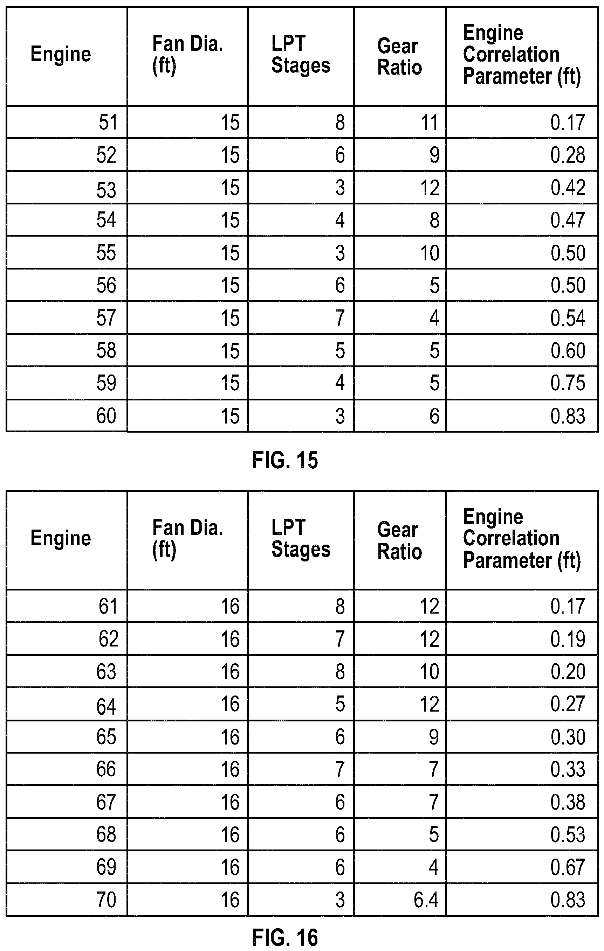

FIG. 15 depicts various engines (i.e., engines 51-60) each comprising a fan diameter of 15 feet. The LPT stages of each engine 51-60 is within a range of 3-8. The gear ratio of each engine 51-60 is within a range of 4-12. The ECP for each engine 51-60 is within a range of 0.17 and 0.83.

FIG. 16 depicts various engines (i.e., engines 61-70) comprising fan diameters of 16 feet. The LPT stages of engines 61-70 are within a range of 3-8. The gear ratios of engines 61-70 are within a range of 4-12. The ECPs for engines 61-70 are within a range of 0.17 and 0.83.

It should be noted that, although the exemplary engines 1-70 comprise fan diameters that are whole numbers (e.g., 10 ft, 11 ft, 12 ft, 14 ft, etc.), an engine can comprise a fan diameter that is not a whole number. For example, a fan can comprise a diameter of 11.5 ft, 12.75 ft, 13.2 ft, 14.1 ft, 15.56 ft, or 16.3 ft.

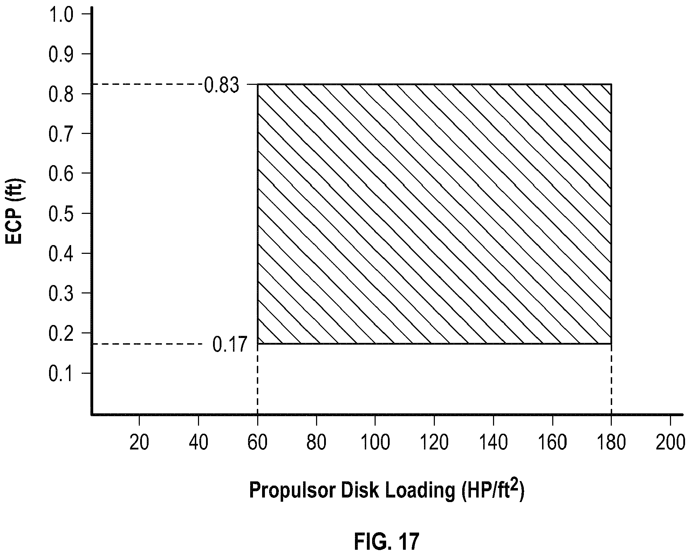

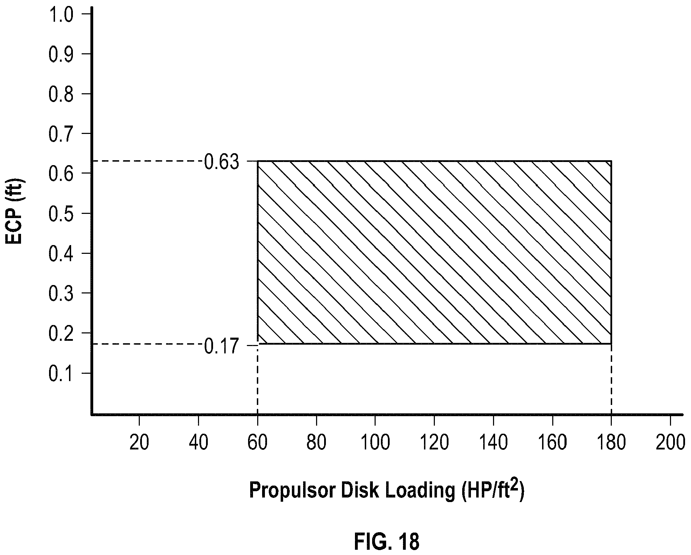

The inventors also discovered a relationship between ECP and the disk loading of the propulsor. Disk loading is the power at a takeoff flight condition measured in horsepower (HP) divided by the swept area of the propulsor measured in square feet (ft²). For example, the inventors have discovered that it is advantageous for an engine to comprise an ECP of 0.17-0.83 and a propulsor disk loading between 60-180 HP/ft² at a takeoff flight condition, as depicted in FIG. 17. More particularly, the inventors have discovered that it is particularly advantageous for an engine to comprise an ECP of 0.17-0.63 and a propulsor disk loading between 60-180 HP/ft² at a takeoff flight condition, as depicted in FIG. 18. An engine with an ECP within a range of 0.17-0.83 ft (or 0.17-0.63 ft) and a propulsor disk loading of 60-180 HP/ft² at a takeoff flight condition can, for example, advantageously provide improved engine performance and efficiency compared to typical engines, while also satisfying the acoustics requirements.

In some examples, a propulsor assembly of an engine has a disk loading of 60-180 HP/ft² and a net efficiency within a range of about 0.57-0.75 at a takeoff flight condition, where net efficiency is defined as net thrust times flight speed divided by input power to the propulsor assembly. In certain instances, the net efficiency of the propulsor assembly is within a range of about 0.62-0.75 and the disk loading of the propulsor assembly is within a range of 60-100 HP/ft² at a takeoff flight condition. In particular examples, the net efficiency of the propulsor assembly is within a range of about 0.57-0.67 and the disk loading of the propulsor assembly is within a range of 160-180 HP/ft² at a takeoff flight condition. In particular examples, the net efficiency of the propulsor assembly is within a range of about 0.58-0.72 and the disk loading of the propulsor assembly is within a range of 100-160 HP/ft² at a takeoff flight condition. Net efficiency varies with disk loading, such that the lower limit may be assumed to vary linearly from 0.65 to 0.57 for the disk loading of 60 to 180 HP/ft² and the upper limit may be assumed to vary linearly from 0.75 to 0.67 for the disk loading 60 to 180 HP/ft². Referring to TABLE 1, below, the net efficiencies vs. disk loading are shown:

| TABLE 1 | | | | | | | |
|---|---|---|---|---|---|---|---|
| Disk Loading (HP/ft²) | 60 | 80 | 100 | 120 | 140 | 160 | 180 |
| Net Efficiency (lower limit) | 0.65 | 0.64 | 0.62 | 0.61 | 0.59 | 0.58 | 0.57 |
| Net Efficiency (upper limit) | 0.75 | 0.74 | 0.72 | 0.71 | 0.70 | 0.68 | 0.67 |

As indicated earlier, turbomachinery engines, such as the engines 100, 200, comprise many variables and factors that affect their performance and/or operation. The interplay between the various components can make it particularly difficult to develop or select one component, especially when each of the components is at a different stage of completion. For example, one or more components may be nearly complete, yet one or more other components may be in an initial or preliminary phase where only one (or a few) parameters is known. Also, each component is subject to change often more than once over the development period, which can often last for many years (e.g., 5-15 years). These complex and intricate individual and collective development processes can be cumbersome and inefficient. For at least these reasons, there is a need for devices and methods that can provide a good estimate of, not only the basic configuration or sizing needed to achieve the desired performance benefits, but also to reflect the penalties or accommodations in other areas in order to realize the desired benefits.

According to another aspect of the disclosure, the ECP can additionally provide a particularly useful indication of the efficiency and effectiveness of the engine during initial development, e.g., as a tool to accept or reject a particular configuration. Thus, the ECP can be used, for example, to guide engine development. For example, the ECP can be used to quickly and accurately determine the suitability of a particular engine without requiring individuals or teams to complete the tedious and time-consuming process of fully developing the engine. Therefore, the ECP can improve the process of developing a turbomachinery engine.

This written description uses examples to disclose the technology, including the best mode, and also to enable any person skilled in the art to practice the disclosed technology, including making and using any devices or systems and performing any incorporated methods. The patentable scope of the disclosed technology is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

Further aspects of the disclosure are provided by the subject matter of the following examples:
Example 1. A turbomachinery engine comprising an unducted rotor assembly, a low-pressure turbine, a low-pressure shaft, a gearbox, and an engine correlation parameter. The unducted rotor assembly comprises a plurality of rotor blades arranged in a single row and defining a blade diameter. The low-pressure turbine comprises a stage count defined by a number of rows of rotating blades of the low-pressure turbine. The low-pressure shaft is coupled to the low-pressure turbine. The gearbox comprises an input, an output, and a gear ratio. The input of the gearbox is coupled to the low-pressure shaft, and the output of the gearbox is coupled to the unducted rotor assembly. The engine correlation parameter is greater than 0.17 and less than 0.83. The engine correlation parameter equals D/N/GR, where D is the blade tip diameter measured in feet, N is the stage count of the low-pressure turbine, and GR is the gear ratio of the gearbox.
Example 2. The turbomachinery engine of any example herein, wherein the engine correlation parameter is greater than 0.17 and less than 0.63.
Example 3. The turbomachinery engine of any example herein, wherein the gear ratio is within a range of 4:1 to 12:1.
Example 4. The turbomachinery engine of any example herein, wherein the stage count of the low-pressure turbine is between 3 and 8.
Example 5. The turbomachinery engine of any example herein, wherein the stage count of the low-pressure turbine is between 4 and 6.
Example 6. The turbomachinery engine of any example herein, wherein the unducted rotor assembly comprises 8-20 rotor blades.
Example 7. The turbomachinery engine of any example herein, wherein the unducted rotor assembly comprises 8-14 rotor blades.
Example 8.The turbomachinery engine of any example herein, further comprising a plurality of non-rotating outlet guide vanes disposed aft of the rotor blades of the unducted rotor assembly.
Example 9. The turbomachinery engine of any example herein, wherein the blade tip diameter is within a range of 10-16 feet.
Example 10. The turbomachinery engine of any example herein, wherein the blade tip diameter is within a range of 11-14 feet.
Example 11. The turbomachinery engine of any example herein, wherein the blade tip diameter is within a range of 12-13 feet.
Example 12. The turbomachinery engine of any example herein, wherein the unducted rotor assembly is configured to rotate at less than 1000 rpm and greater than 450 rpm at a cruise flight condition.
Example 13. The turbomachinery engine of any example herein, wherein the turbomachinery engine is configured to operate at a cruise flight condition greater than 0.6 Mach and less than 0.9 Mach.
Example 14. The turbomachinery engine of any example herein, further comprising a net thrust within a range of 10,000-100,000 pounds force at a max takeoff condition.
Example 15. The turbomachinery engine of any example herein, further comprising a net thrust within a range of 20,000-35,000 pounds force at a max takeoff condition.
Example 16. The turbomachinery engine of any example herein, wherein the unducted rotor assembly comprises a disk loading within a range of 60-180 HP/ft² at a takeoff flight condition.
Example 17. The turbomachinery engine of any example herein, wherein the fan comprises a solidity within a range of 0.5-1.0.
Example 18. The turbomachinery engine of any example herein, wherein the fan comprises a solidity within a range of 0.6-1.0.
Example 19. The turbomachinery engine of any example herein, wherein the fan comprises a solidity within a range of 1.1-1.5.
Example 20. The turbomachinery engine of any example herein, wherein the fan comprises a solidity within a range of 1.1-1.3.
Example 21. A single unducted rotor turbomachinery engine includes a low-pressure turbine, a low-pressure spool, a gearbox, and an unducted rotor assembly. The low-pressure turbine defines a stage count. The low-pressure spool is coupled to the low-pressure turbine. The gearbox defines a gear ratio. The unducted rotor assembly includes a plurality of rotor blades defining a blade tip diameter, and the unducted rotor assembly is coupled to the low-pressure spool via the gearbox. The single unducted rotor turbomachinery engine defines an engine correlation parameter equal to the blade tip diameter measured in feet, divided by the stage count of the low-pressure turbine, divided by the gear ratio of the gearbox, and the engine correlation parameter is greater than 0.17 and less than 0.83.
Example 22. The single unducted rotor turbomachinery engine of any example herein, wherein the engine correlation parameter is greater than 0.17 and less than 0.63.
Example 23. The single unducted rotor turbomachinery engine of any example herein, wherein the gear ratio is between 4:1 and 12:1.
Example 24. The single unducted rotor turbomachinery engine of any example herein, wherein the stage count is between 3 and 8.
Example 25. The single unducted rotor turbomachinery engine of any example herein, wherein the stage count of the low-pressure turbine is between 4 and 6.
Example 26. The single unducted rotor turbomachinery engine of any example herein, wherein the unducted rotor assembly comprises 8-20 rotor blades.
Example 27. The single unducted rotor turbomachinery engine of any example herein, wherein the unducted rotor assembly comprises 8-14 rotor blades.
Example 28. The single unducted rotor turbomachinery engine of any example herein, further comprise a plurality of non-rotating outlet guide vanes disposed aft of the rotor blades of the unducted rotor assembly.
Example 29. The single unducted rotor turbomachinery engine of any example herein, wherein the blade tip diameter is within a range of 10-16 feet.
Example 30. The single unducted rotor turbomachinery engine of any example herein, wherein the blade tip diameter is within a range of 11-14 feet.
Example 31. The single unducted rotor turbomachinery engine of any example herein, wherein the blade tip diameter is within a range of 12-13 feet.
Example 32. The single unducted rotor turbomachinery engine of any example herein, wherein the unducted rotor assembly is configured to rotate at less than 1000 rpm and greater than 450 rpm at a cruise flight condition.
Example 33. The single unducted rotor turbomachinery engine of any example herein, wherein the single unducted rotor turbomachinery engine is configured to operate at a cruise flight condition greater than 0.7 Mach and less than 0.9 Mach.
Example 34. The single unducted rotor turbomachinery engine of any example herein, further comprising a net thrust within a range of 10,000-100,000 pounds force at a max takeoff condition.
Example 35. The single unducted rotor turbomachinery engine of any example herein, further comprising a net thrust within a range of 20,000-35,000 pounds force at a max takeoff condition.
Example 36. The single unducted rotor turbomachinery engine of any example herein, wherein the unducted rotor assembly comprises a disk loading within a range of 60-180 HP/ft² at a takeoff flight condition.
Example 37. The single unducted rotor turbomachinery engine of any example herein, wherein the fan comprises a solidity within a range of 0.5-1.0.
Example 38. The single unducted rotor turbomachinery engine of any example herein, wherein the fan comprises a solidity within a range of 0.6-1.0.
Example 39. The single unducted rotor turbomachinery engine of any example herein, wherein the fan comprises a solidity within a range of 1.1-1.5.
Example 40. The single unducted rotor turbomachinery engine of any example herein, wherein the fan comprises a solidity within a range of 1.1-1.3.
Example 41. A turbomachinery engine includes an unducted propulsor assembly, a low-pressure compressor, a low-pressure turbine, a low-pressure shaft, a high-pressure compressor, a high-pressure turbine, a high-pressure shaft, a gearbox, and an engine correlation parameter. The unducted propulsor assembly includes a plurality of propulsor blades arranged in a single row and defining a blade diameter, and the blade tip diameter is within a range of 8-16 feet. The low-pressure compressor includes one or more LPC rotors which define a LPC stage count. The low-pressure turbine includes a plurality of LPT rotors which define a LPT stage count, and the LPT stage count is within a range of 3-8. The low-pressure shaft is coupled to the low-pressure compressor and the low-pressure turbine. The high-pressure compressor includes a plurality of HPC rotors which define a HPC stage count. The high-pressure turbine includes one or more HPT rotors which define a HPT stage count. The high-pressure shaft is coupled to the high-pressure compressor and the high-pressure turbine. The gearbox includes an input, an output, and a gear ratio. The input is coupled to the low-pressure shaft and is configured to rotate at a first rotational speed. The output is coupled to the unducted propulsor assembly and is configured to rotate at a second rotational speed, which is less than the first rotational speed. The gear ratio is defined by a ratio of the first rotational speed to the second rotational speed and is within a range of 4-12. The engine correlation parameter is within a range of 0.17-0.83, where the engine correlation parameter equals D/N/GR, D is the blade tip diameter of the propulsor blades measured in feet, N is the LPT stage count of the low-pressure turbine, and GR is the gear ratio of the gearbox.
Example 42. The turbomachinery engine of any example herein, wherein the engine correlation parameter is within a range of 0.17-0.63.
Example 43. The turbomachinery engine of any example herein, wherein the unducted propulsor assembly comprises 8-20 propulsor blades.
Example 44. The turbomachinery engine of any example herein, wherein the unducted propulsor assembly comprises 8-14 propulsor blades.
Example 45. The turbomachinery engine of any example herein, further comprise a plurality of stationary outlet guide vanes disposed aft of the propulsor blades.
Example 46. The turbomachinery engine of any example herein, wherein the blade tip diameter is within a range of 8-14 feet, 11-14 feet, or 10-16 feet.
Example 47. The turbomachinery engine of any example herein, wherein the blade tip diameter is within a range of 12-13 feet.
Example 48. The turbomachinery engine of any example herein, wherein the unducted propulsor assembly is configured to rotate within a range of 450-1000 rpm at a cruise flight condition.
Example 49. The turbomachinery engine of any example herein, wherein the turbomachinery engine is configured to operate at a cruise flight condition within a range of 0.6-0.9 Mach.
Example 50. The turbomachinery engine of any example herein, further comprising a net thrust within a range of 10,000-100,000 pounds force at a max takeoff condition.
Example 51. The turbomachinery engine of any example herein, further comprising a net thrust within a range of 20,000-35,000 pounds force at a max takeoff condition.
Example 52. The turbomachinery engine of any example herein, wherein the propulsor assembly comprises a disk loading within a range of 60-180 HP/ft² at a takeoff flight condition.
Example 53. The turbomachinery engine of any example herein, wherein the gearbox is an epicyclic gearbox comprising a sun gear, a plurality of planet gears, and a ring gear, wherein the sun gear is the input, and wherein the ring gear is the output.
Example 54. The turbomachinery engine of any example herein, wherein the gearbox is an epicyclic gearbox comprising a sun gear, a plurality of planet gears, and a ring gear, wherein the sun gear is the input, wherein the planet gears are coupled to a planet carrier, and wherein the planet carrier is the output.
Example 55. The turbomachinery engine of any example herein, wherein the gearbox is a multi-stage gearbox.
Example 56. The turbomachinery engine of any example herein, wherein the gearbox is a two-stage gearbox.
Example 57. The turbomachinery engine of any example herein, wherein the gearbox is a compound gearbox.
Example 58. The turbomachinery engine of any example herein, wherein the LPC stage count is within a range of 1-3.
Example 59. The turbomachinery engine of any example herein, wherein the HPC stage count is within a range of 10-11.
Example 60. The turbomachinery engine of any example herein, wherein the HPT stage count is two.
Example 61. The turbomachinery engine of any example herein, wherein the LPT stage count is four.
Example 62. The turbomachinery engine of any example herein, wherein the low-pressure turbine is a counter-rotating low-pressure turbine, wherein the LPT rotors include a plurality of inner rotors and a plurality of outer rotors arranged in an alternating configuration.
Example 63. The turbomachinery engine of any example herein, wherein the fan comprises a solidity within a range of 0.5-1.0.
Example 64. The turbomachinery engine of any example herein, wherein the fan comprises a solidity within a range of 0.6-1.0.
Example 65. The turbomachinery engine of any example herein, wherein the fan comprises a solidity within a range of 1.1-1.5.
Example 66. The turbomachinery engine of any example herein, wherein the fan comprises a solidity within a range of 1.1-1.3.
Example 67. The turbomachinery engine of any example herein, wherein the turbomachinery engine comprises a third stream.
Example 68. The turbomachinery engine of any example herein, wherein the propulsor assembly has a disk loading of 60-180 HP/ft² and a net efficiency within a range of 0.57-0.75 at a takeoff flight condition.
Example 69. The turbomachinery engine of any example herein, wherein a net efficiency of the propulsor assembly is within a range of 0.64-0.75 and a disk loading of the propulsor assembly is within a range of 60-80 HP/ft² at a takeoff flight condition.
Example 70. The turbomachinery engine of any example herein, wherein a net efficiency of the propulsor assembly is within a range of 0.57-0.68 and a disk loading of the propulsor assembly is within a range of 160-180 HP/ft² at a takeoff flight condition.
Example 71. The turbomachinery engine of any example herein, wherein a net efficiency of the propulsor assembly is within a range of 0.58-0.72 and the disk loading of the propulsor assembly is within a range of 100-160 HP/ft² at a takeoff flight condition.
Example 72. A turbomachinery engine comprising: an unducted rotor assembly comprising a plurality of rotor blades arranged in a single row and defining a blade tip diameter; a low-pressure turbine comprising a stage count defined by a number of rows of rotating blades of the low-pressure turbine; a low-pressure shaft coupled to the low-pressure turbine; a gearbox comprising an input, an output, and a gear ratio, wherein the input of the gearbox is coupled to the low-pressure shaft, and wherein the output of the gearbox is coupled to the unducted rotor assembly; and an engine correlation parameter that is greater than 0.17 and less than 0.83, wherein the engine correlation parameter equals D/N/GR, wherein D is the blade tip diameter measured in feet, wherein N is the stage count of the low-pressure turbine, and wherein GR is the gear ratio of the gearbox.
Example 73. The turbomachinery engine of any preceding example, wherein the engine correlation parameter is greater than 0.17 and less than 0.63.
Example 74. The turbomachinery engine of any preceding example, wherein the gear ratio is within a range of 4:1 to 12:1.
Example 75. The turbomachinery engine of any preceding example, wherein the stage count of the low-pressure turbine is between 3 and 8.
Example 76. The turbomachinery engine of any preceding example, wherein the stage count of the low-pressure turbine is between 4 and 6.
Example 77. The turbomachinery engine of any preceding example, wherein the unducted rotor assembly comprises 8-20 rotor blades.
Example 78. The turbomachinery engine of any preceding example, wherein the unducted rotor assembly comprises 8-14 rotor blades.
Example 79. The turbomachinery engine of any preceding example, wherein the unducted rotor assembly comprises a disk loading within a range of 60-180 HP/ft2 at a takeoff flight condition.
Example 80. The turbomachinery engine of any preceding example, further comprising a third stream.
Example 81. A single unducted rotor turbomachinery engine comprising: a low-pressure turbine defining a stage count; a low-pressure spool coupled to the low-pressure turbine;
   a gearbox defining a gear ratio; and an unducted rotor assembly comprising a plurality of rotor blades defining a blade tip diameter, the unducted rotor assembly coupled to the low-pressure spool via the gearbox, wherein the single unducted rotor turbomachinery engine defines an engine correlation parameter equal to the blade tip diameter measured in feet, divided by the stage count of the low-pressure turbine, divided by the gear ratio of the gearbox, and wherein the engine correlation parameter is greater than 0.17 and less than 0.83.
Example 82. The single unducted rotor turbomachinery engine of any preceding example, wherein the engine correlation parameter is greater than 0.17 and less than 0.63.
Example 83. The single unducted rotor turbomachinery engine of any preceding example, wherein the gear ratio is between 4:1 and 12:1.
Example 84. The single unducted rotor turbomachinery engine of any preceding example, wherein the stage count is between 3 and 8.
Example 85. The single unducted rotor turbomachinery engine of any preceding example, wherein the stage count of the low-pressure turbine is between 4 and 6.
Example 86. The single unducted rotor turbomachinery engine of any preceding example, wherein the unducted rotor assembly comprises 8-20 rotor blades.
Example 87. The single unducted rotor turbomachinery engine of any preceding example, wherein the unducted rotor assembly comprises 8-14 rotor blades.
Example 88. The single unducted rotor turbomachinery engine of any preceding example, wherein the unducted rotor assembly comprises a disk loading within a range of 60-180 HP/ft2 at a takeoff flight condition.
Example 89. The single unducted rotor turbomachinery engine of any preceding example, further comprising a third stream.
Example 90. A turbomachinery engine comprising: an unducted propulsor assembly comprising a plurality of propulsor blades arranged in a single row and defining a blade tip diameter, wherein the blade tip diameter is within a range of 8-16 feet; a low-pressure compressor comprising one or more LPC rotors which define a LPC stage count; a low-pressure turbine comprising a plurality of LPT rotors which define a LPT stage count, wherein the LPT stage count is within a range of 3-8; a low-pressure shaft coupled to the low-pressure compressor and the low-pressure turbine; a high-pressure compressor comprising a plurality of HPC rotors which define a HPC stage count; a high-pressure turbine comprising one or more HPT rotors which define a HPT stage count; a high-pressure shaft coupled to the high-pressure compressor and the high-pressure turbine; a gearbox comprising an input, an output, and a gear ratio, wherein the input is coupled to the low-pressure shaft and is configured to rotate at a first rotational speed, wherein the output is coupled to the unducted propulsor assembly and is configured to rotate at a second rotational speed, which is less than the first rotational speed, and wherein the gear ratio is defined by a ratio of the first rotational speed to the second rotational speed and is within a range of 4-12; and an engine correlation parameter that is within a range of 0.17-0.83, wherein the engine correlation parameter equals D/N/GR, wherein D is the blade tip diameter of the propulsor blades measured in feet, wherein N is the LPT stage count of the low-pressure turbine, and wherein GR is the gear ratio of the gearbox.
Example 91. The turbomachinery engine of any preceding example, wherein the engine correlation parameter is within a range of 0.17-0.63.
Example 92. The turbomachinery engine of any preceding example, wherein the unducted propulsor assembly comprises 8-20 propulsor blades.
Example 93. The turbomachinery engine of any preceding example, wherein the unducted propulsor assembly comprises 8-14 propulsor blades.
Example 94. The turbomachinery engine of any preceding example, further comprise a plurality of stationary outlet guide vanes disposed aft of the propulsor blades.
Example 95. The turbomachinery engine of any preceding example, wherein the blade tip diameter is within a range of 8-14 feet, 11-14 feet, or 10-16 feet.
Example 96. The turbomachinery engine of any preceding example, further comprising a third stream.
Example 94. The turbomachinery engine of any preceding example, wherein the unducted propulsor assembly comprises a disk loading within a range of 60-180 HP/ft2 at a takeoff flight condition.
Example 95. The turbomachinery engine of any preceding example, wherein the unducted propulsor assembly has a net efficiency within a range of 0.57-0.75 at the takeoff flight condition.

## Claims

1. A turbomachinery engine comprising:
an unducted rotor assembly comprising a plurality of rotor blades arranged in a single row and defining a blade tip diameter;
a low-pressure turbine comprising a stage count defined by a number of rows of rotating blades of the low-pressure turbine;
a low-pressure shaft coupled to the low-pressure turbine;
a gearbox comprising an input, an output, and a gear ratio, wherein the input of the gearbox is coupled to the low-pressure shaft, and wherein the output of the gearbox is coupled to the unducted rotor assembly; and
an engine correlation parameter that is greater than 0.17 and less than 0.83, wherein the engine correlation parameter equals D/N/GR, wherein D is the blade tip diameter measured in feet, wherein N is the stage count of the low-pressure turbine, and wherein GR is the gear ratio of the gearbox.

2. The turbomachinery engine of claim 1, wherein the engine correlation parameter is greater than 0.17 and less than 0.63 and/or the gear ratio is within a range of 4:1 to 12:1.

3. The turbomachinery engine of any preceding claim, wherein the stage count of the low-pressure turbine is between 3 and 8, or preferably between 4 and 6.

4. The turbomachinery engine of any preceding claim, wherein the unducted rotor assembly comprises 8-20 rotor blades, or preferably 8-14 rotor blades.

5. The turbomachinery engine of any preceding claim, wherein the unducted rotor assembly comprises a disk loading within a range of 60-180 HP/ft² at a takeoff flight condition.

6. The turbomachinery engine of any preceding claim, further comprising a third stream.

7. A single unducted rotor turbomachinery engine comprising:
a low-pressure turbine defining a stage count;
a low-pressure spool coupled to the low-pressure turbine;
a gearbox defining a gear ratio; and
an unducted rotor assembly comprising a plurality of rotor blades defining a blade tip diameter, the unducted rotor assembly coupled to the low-pressure spool via the gearbox,
wherein the single unducted rotor turbomachinery engine defines an engine correlation parameter equal to the blade tip diameter measured in feet, divided by the stage count of the low-pressure turbine, divided by the gear ratio of the gearbox, and wherein the engine correlation parameter is greater than 0.17 and less than 0.83.

8. The single unducted rotor turbomachinery engine of claim 7, wherein the engine correlation parameter is greater than 0.17 and less than 0.63 and/or the gear ratio is between 4:1 and 12:1.

9. The single unducted rotor turbomachinery engine of claim 7 or 8, wherein the stage count is between 3 and 8, or preferably between 4 and 6.

10. The single unducted rotor turbomachinery engine of any of claims 7 to 9, wherein the unducted rotor assembly comprises 8-20 rotor blades, or preferably 8-14 rotor blades.

11. A turbomachinery engine comprising:
an unducted propulsor assembly comprising a plurality of propulsor blades arranged in a single row and defining a blade tip diameter, wherein the blade tip diameter is within a range of 8-16 feet;
a low-pressure compressor comprising one or more LPC rotors which define a LPC stage count;
a low-pressure turbine comprising a plurality of LPT rotors which define a LPT stage count, wherein the LPT stage count is within a range of 3-8;
a low-pressure shaft coupled to the low-pressure compressor and the low-pressure turbine;
a high-pressure compressor comprising a plurality of HPC rotors which define a HPC stage count;
a high-pressure turbine comprising one or more HPT rotors which define a HPT stage count;
a high-pressure shaft coupled to the high-pressure compressor and the high-pressure turbine;
a gearbox comprising an input, an output, and a gear ratio, wherein the input is coupled to the low-pressure shaft and is configured to rotate at a first rotational speed, wherein the output is coupled to the unducted propulsor assembly and is configured to rotate at a second rotational speed, which is less than the first rotational speed, and wherein the gear ratio is defined by a ratio of the first rotational speed to the second rotational speed and is within a range of 4-12; and
an engine correlation parameter that is within a range of 0.17-0.83, wherein the engine correlation parameter equals D/N/GR, wherein D is the blade tip diameter of the propulsor blades measured in feet, wherein N is the LPT stage count of the low-pressure turbine, and wherein GR is the gear ratio of the gearbox.

12. The turbomachinery engine of claim 11, wherein the engine correlation parameter is within a range of 0.17-0.63.

13. The turbomachinery engine of claim 11 or 12, wherein the unducted propulsor assembly comprises 8-20 propulsor blades, or preferably 8-14 propulsor blades.

14. The turbomachinery engine of any of claims 11 to 13, further comprise a plurality of stationary outlet guide vanes disposed aft of the propulsor blades.

15. The turbomachinery engine of any of claims 11 to 14, wherein the blade tip diameter is within a range of 8-14 feet, 11-14 feet, or 10-16 feet.
